# EUROPÄISCHE PATENTSCHRIFT

(11) **EP 3 802 236 B1**
(45) Veröffentlichungstag und Bekanntmachung des Hinweises auf die Patenterteilung: **13.04.2022**
(21) Anmeldenummer: 19727837.7
(22) Anmeldetag: 08.05.2019
(51) Int. Cl.: B60S 1/08, G06K 9/62, G06T 7/40, G06K 9/00, G06K 9/03, G06T 7/00

(54) **BILDINFORMATIONSBEWERTUNGSVERFAHREN, COMPUTER-PROGRAMM-PRODUKT ZUR BILDINFORMATIONSBEWERTUNG, BILDINFORMATIONSBEWERTUNGSSYSTEM UND FAHRZEUG, INSBESONDERE FÜR DEN SCHIENEN- UND STRASSENVERKEHR**
IMAGE INFORMATION EVALUATION METHOD, COMPUTER PROGRAM PRODUCT FOR IMAGE INFORMATION EVALUATION, IMAGE INFORMATION EVALUATION SYSTEM, AND VEHICLE, IN PARTICULAR FOR RAIL AND ROAD TRANSPORT
PROCÉDÉ D'ÉVALUATION D'INFORMATIONS D'IMAGES, PRODUIT-PROGRAMME INFORMATIQUE D'ÉVALUATION D'INFORMATIONS D'IMAGES, SYSTÈME D'ÉVALUATION D'INFORMATIONS D'IMAGES ET VÉHICULE, EN PARTICULIER POUR LE TRAFIC ROUTIER ET FERROVIAIRE

(30) Priorität: 29.05.2018 DE 102018208527
(43) Veröffentlichungstag der Anmeldung: 14.04.2021
(73) Patentinhaber: Siemens Mobility GmbH, 81739 München (DE)
(72) Erfinder: SCHÖNBERGER, Andreas, 96049 Bamberg (DE)
(86) Internationale Anmeldenummer: PCT/EP2019/061860
(87) Internationale Veröffentlichungsnummer: WO 2019/228771

(56) Entgegenhaltungen:
- WO-A1-01/77763
- DE-A1-102008 001 679
- DE-A1-102012 222 126
- DE-A1-102014 226 358
- US-A1- 2016 109 617

## Beschreibung

Die Erfindung bezieht sich auf ein Bildinformationsbewertungsverfahren gemäß dem Oberbegriff des Patentanspruches 1, ein Computer-Programm-Produkt zur Bildinformationsbewertung gemäß dem Oberbegriff des Patentanspruches 7, ein Bildinformationsbewertungssystem gemäß dem Oberbegriff des Patentanspruches 12 und ein Fahrzeug, insbesondere für den Schienen- und Straßenverkehr, gemäß dem Oberbegriff des Patentanspruches 18.

In Fahrzeugen aller Art, insbesondere jedoch für den Schienen- und Straßenverkehr, wird eine Bild- oder Video-basierte Auswertung der Fahrzeugumgebung immer wichtiger, insbesondere die Auswertung der Sicht nach vorne durch eine Windschutzscheibe. Genauso könnte aber statt der Windschutzscheibe auch eine Heckscheibe oder eine Seitenscheibe für die Bild- oder Video-basierte Auswertung der Fahrzeugumgebung bedeutsam sein. Die Qualität der Bilder ist für die Bild- oder Video-basierte Auswertung von zentraler Bedeutung und kann je nach Positionierung einer Kamera oder von Kameras durch Beschlag auf der Innen- oder Außenseite der Windschutzscheibe, z.B. Kondensation auf der Innenseite der Scheibe oder z.B. Eis oder durch Niederschlag (Regen) auf der Außenseite der Scheibe, stark beeinträchtigt werden.

Dieses Problem wurde bisher nur indirekt dadurch gelöst, dass nicht analysierbare Bilder verworfen wurden. Das kann jedoch dazu führen, dass Bild- oder Videoauswertungen falsche Ergebnisse liefern, z.B. durch Licht, das bei Wassertropfen auf der Windschutzscheibe bricht. DE 10 2008 001679 A1 offenbart den Oberbegriff der unabhängigen Ansprüche 1, 7 und 12.

Die der Erfindung zugrundeliegende Aufgabe besteht darin, ein Bildinformationsbewertungsverfahren, ein Computer-Programm-Produkt zur Bildinformationsbewertung, ein Bildinformationsbewertungssystem und ein Fahrzeug, insbesondere für den Schienen- und Straßenverkehr, anzugeben, mit dem auf einfache und kostengünstige Weise auf die Qualität oder Güte von aus dem Fahrzeug aufgenommener Einzelbilder oder Videos geschlossen werden kann.

Diese Aufgabe wird ausgehend von dem im Oberbegriff des Patentanspruchs 1 definierten dem Bildinformationsbewertungsverfahren durch die im Kennzeichen des Patentanspruches 1 angegebenen Merkmale gelöst.

Darüber hinaus wird die Aufgabe ausgehend von dem im Oberbegriff des Patentanspruchs 7 definierten Computer-Programm-Produkt zur Bildinformationsbewertung durch die im Kennzeichen des Patentanspruches 7 angegebenen Merkmale gelöst.

Weiterhin wird die Aufgabe ausgehend von dem im Oberbegriff des Patentanspruchs 12 definierten Bildinformationsbewertungssystem durch die im Kennzeichen des Patentanspruches 12 angegebenen Merkmale gelöst.

Außerdem wird die Aufgabe ausgehend von dem im Oberbegriff des Patentanspruchs 18 definierten Fahrzeug, insbesondere für den Schienen- und Straßenverkehr, durch die im Kennzeichen des Patentanspruches 18 angegebenen Merkmale gelöst.

Die der Erfindung gemäß den unabhängigen Ansprüchen 1, 7, 12 und 18 zugrunde liegenden Idee besteht darin, dass auf Basis von Stellungen und/oder Bewegungen markanter, z.B. Markierungen (z.B. in Form von Farbpunkten) aufweisender, Fahrzeugscheibenkomponenten, insbesondere markanter, z.B. künstlich markierter, Windschutzscheiben-Wischer und/oder Heckscheiben-Wischer, für gemeldete Positionen der Fahrzeugscheibenkomponenten durch einen SOLL-IST-Vergleich von IST-Einzelbildern oder IST-Videos mit SOLL-Einzelbildern respektive IST-Videos, die jeweils von einem Fahrzeug aus, aus einer identischen fahrzeugspezifischen Relativposition zur Fahrzeugscheibe aufgenommen sind, eine qualitäts- bzw. gütemäßige Bildbewertung in Abhängigkeit davon, wie gut zumindest markante Punkte, insbesondere die Markierungen, der Fahrzeugscheibenkomponenten an für die gemeldeten Positionen durch den Vergleich definierten SOLL-Positionen zu erkennen sind, durchgeführt wird.

Bei einer derartig durchgeführten qualitäts- bzw. gütemäßige Bildbewertung, wo Informationen über die Fahrzeugscheibenkomponenten, aktuelle Kamera-Einzelbilder/Kamera-Videos und Soll-Einzelbilder/SOLL-Videos der Kamera relativ zu den Informationen über die Fahrzeugscheibenkomponenten abgeglichen werden, ist es möglich oder erreichbar, dass
- Beeinträchtigungen von Scheiben zuverlässig erkannt werden oder die besten Bilder/Videos aus mehreren Bildern(Videos ausgewählt werden können,
- Bild-/Videoauswertungen zuverlässiger funktionieren, weil freigewischte Bereiche eine höhere Bewertung bekommen als nicht freigewischte Bereiche.

Statt der Windschutzscheiben-Wischer und/oder Heckscheiben-Wischer können auch andere fixierte oder sich bewegende Komponenten innerhalb oder außerhalb von Scheiben als Fahrzeugscheibenkomponente angebracht werden, um Referenzpunkte für die Bewertung der Bildqualität oder Bildregionen vorzunehmen. Dieses gilt auch für Seitenscheiben.

Möglich vorteilhafte Weiterbildungen der Erfindung sind, dass
- wenn gemäß der Ansprüche 2, 8 und 13 die markanten Punkte, insbesondere die Markierungen, gut an den SOLL-Positionen zu erkennen sind, die Fahrzeugscheibe keine Beeinträchtigungen aufweist, wie sie z.B. bei Kondensation auf der Scheibeninnenseite des Fahrzeugs, bei gefrorenem Eis-/Schneebelag auf der Scheibenaußenseite des Fahrzeugs, bei Verschmutzung oder bei Vandalismus/Bemalung gegeben sind, und deshalb eine entsprechende Qualitäts- bzw. Gütebewertung erfolgen kann;
- gemäß der Ansprüche 3, 9 und 14 die Qualitäts- bzw. Gütebewertungen zur Bildinformationsauswertung an ein Bild-/Videoauswertesystem gemeldet werden und die Auswertungen der Bildinformationen gemäß der Ansprüche 4 und 15 historisiert werden, um Kontextänderungen zu erkennen, wie z.B. das Altern der Wischer, einsetzenden Regen, allmähliches Beschlagen der Fahrzeugscheiben etc.;
- die Qualitäts- bzw. Gütebewertungen der Bildinformationsbewertung gemäß der Ansprüche 5, 10 und 16 in Form von Diagnosemeldungen oder Alarmmeldungen an ein Diagnose-/Alarmsystem gemeldet werden, die dann von einer Bedienperson des Diagnose-/Alarmsystems genutzt werden kann, um die Notwendigkeit weiterer Eingriffe zu bewerten und diese dann gegebenenfalls auch einzuleiten;
- gemäß der Ansprüche 6, 11 und 17 bei einem markanten, z.B. die Markierungen aufweisenden, Windschutzscheiben-Wischer und/oder Heckscheiben-Wischer im Fall von Niederschlag oder

Regen, die Qualität bzw. die Güte für Regionen in den Einzelbildern/Videos so bewertet wird, dass in den Regionen, in denen der Wischer gerade eben gewischt hat und zu sehen gewesen ist, also der freigewischte Bereich, eine höhere Qualitäts- bzw. Gütebewertung erhält als der Bereich, in denen der Wischer schon länger nicht mehr gewesen ist.

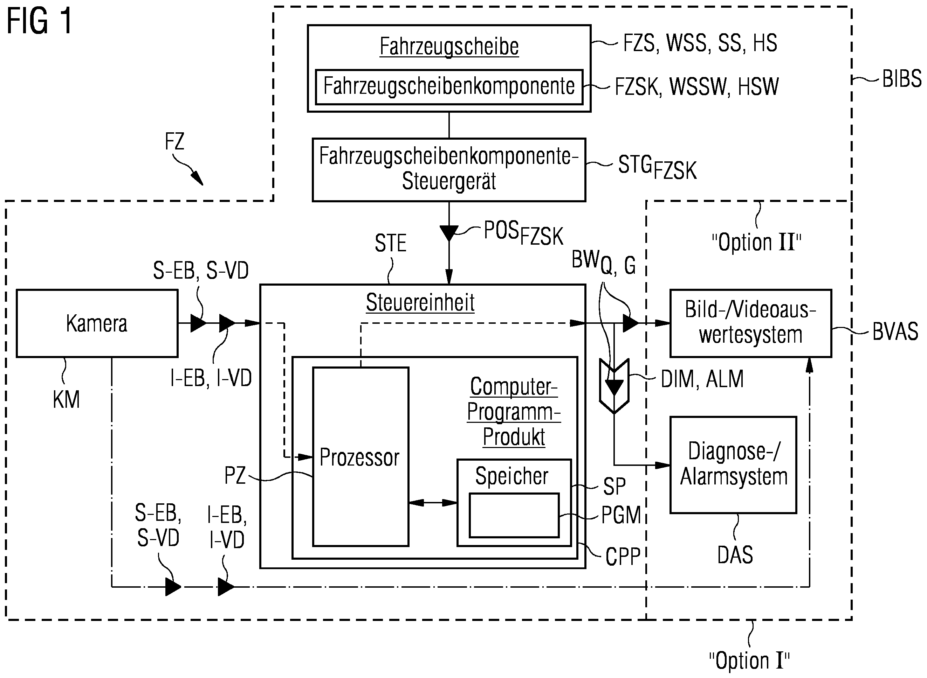

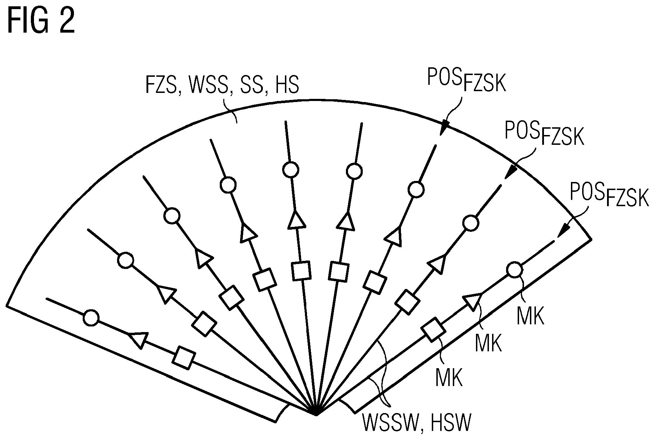

Weitere Vorteile der Erfindung ergeben sich aus der nachfolgenden Beschreibung eines Ausführungsbeispieles der Erfindung anhand der FIGUREN 1 und 2. Diese zeigen:
FIGUR 1 ein Bildinformationsbewertungssystem als Bestandteil eines Fahrzeugs, insbesondere im Schienen- und Straßenverkehr,
FIGUR 2 eine Fahrzeugscheibe mit Markierungen versehener Scheibenwischer in unterschiedlichen Positionen.

FIGUR 1 zeigt ein Bildinformationsbewertungssystem BIBS als Bestandteil eines Fahrzeugs FZ, insbesondere im Schienen- und Straßenverkehr. Das Bildinformationsbewertungssystem BIB enthält eine Kamera KM, die eine Vielzahl von IST-Einzelbildern I-EB oder IST-Videos I-VD von dem Fahrzeug FZ aus und zwar relativ-positioniert zu einer Fahrzeugscheibe FZS, wie sie FIGUR 2 exemplarisch dargestellt ist, aufnimmt. Relativ-positioniert zu der Fahrzeugscheibe FZS bedeutet hierbei vorzugsweise hinter der Fahrzeugscheibe FZS. Die Fahrzeugscheibe FZS ist darüber hinaus vorzugsweise als Windschutzscheibe WSS, Seitenscheibe SS oder Heckscheibe HS ausgebildet und gehört als Bestandteil des Fahrzeugs FZ, wie die Kamera KM, zu dem Bildinformationsbewertungssystem BIB.

Mit der Kamera KM werden aber nicht nur die IST-Einzelbilder I-EB oder IST-Videos I-VD aufgenommen, sondern es wird aus der gleichen fahrzeugspezifischen Relativposition zur Fahrzeugscheibe FZS wie bei der IST-Einzelbild/IST-Video-Erfassung auch eine Vielzahl von SOLL-Einzelbildern S-EB oder SOLL-Videos S-VD aufgenommen und zwar gemäß der FIGUR 2 von Stellungen und/oder Bewegungen markanter, z.B. Markierungen MK aufweisender, mindestens einer Fahrzeugscheibenkomponente FZSK, wie z.B. einem Windschutzscheiben-Wischer WSSW und/oder einem Heckscheiben-Wischer HSW.

Die auf den Windschutzscheiben-Wischern WSSW und/oder Heckscheiben-Wischern HSW angebrachten Markierungen MK können z.B. in der einfachsten Form gewöhnliche Farbpunkte sein. Es ist aber auch jede andere beliebige Art von Markierung möglich, die optisch wahrnehmbar und in Bildern/Videos zu erfassen ist.

Statt der Windschutzscheiben-Wischer WSSW und/oder Heckscheiben-Wischer HSW können auch andere fixierte oder sich bewegende Komponenten innerhalb oder außerhalb von Scheiben als Fahrzeugscheibenkomponente angebracht werden, um Referenzpunkte für die Bewertung der Bildqualität oder Bildregionen vorzunehmen. Dieses gilt auch für Seitenscheiben.

Die Fahrzeugscheibenkomponente FZSK bzw. der Windschutzscheiben-Wischer WSSW und/oder der Heckscheiben-Wischer HSW wird in dem Fahrzeug FZ von einem Fahrzeugscheibenkomponente-Steuergerät STG_{FZSK}, das ebenfalls in dem Bildinformationsbewertungssystem BIB enthalten ist, gesteuert, kontrolliert und überwacht.

Im Zuge dieses Funktions- und Aufgabenspektrums kennt das Fahrzeugscheibenkomponente-Steuergerät STG_{FZSK} Positionen POS_{FZSK} der Fahrzeugscheibenkomponenten FZSK, WSSW, HSW und übermittelt diese an eine Steuereinheit STE, die dazu als weitere Systemkomponente des Bildinformationsbewertungssystems BIB mit dem Fahrzeugscheibenkomponente-Steuergerät STG_{FZSK} verbunden ist.

Die Steuereinheit STE, die darüber hinaus mit der Kamera KM zwecks Hochladens sowohl der IST-Einzelbilder I-EB oder IST-Videos I-VD als auch der SOLL-Einzelbilder S-EB oder SOLL-Videos S-VD verbunden ist, enthält ein Computer-Programm-Produkt CPP zur Bildinformationsbewertung mit einem nicht-flüchtigen, lesbaren Speicher SP, in dem prozessorlesbare Steuerprogrammbefehle eines die Bildinformationsbewertung durchführenden Programm-Moduls PGM gespeichert sind, und einem mit dem Speicher SP verbundenen Prozessor PZ, der die Steuerprogrammbefehle des Programm-Moduls PGM zur Bildinformationsbewertung ausführt.

Die so in das Bildinformationsbewertungssystem BIB eingebettete Steuereinheit STE ist derart ausgebildet, dass für die übermittelten Positionen POS_{FZSK} der Fahrzeugscheibenkomponenten FZSK, WSSW, HSW gemäß der FIGUR 2 und zur qualitäts- bzw. gütemäßigen Bildbewertung die IST-Einzelbilder I-EB mit den SOLL-Einzelbildern S-EB respektive die IST-Videos I-VD mit den SOLL-Videos S-VD verglichen werden, wobei in Abhängigkeit davon, wie gut zumindest markante Punkte, vorzugsweise die Markierungen MK, der Fahrzeugscheibenkomponenten FZSK, WSSW, HSW an für die gemeldeten Positionen POS_{FZSK} durch den Vergleich definierten SOLL-Positionen zu erkennen sind, die IST-Einzelbilder I-EB bzw. IST-Videos I-VD qualitäts- bzw. gütemäßig, z.B. wertemäßig in Form und Gestalt einer Qualitäts- bzw. Gütebewertung BW_{Q},_{G}, bewertet werden.

Dabei ist die Steuereinheit STE mit dem Computer-Programm-Produkt CPP zur Bildinformationsbewertung derart ausgebildet, dass, wenn die markanten Punkte bzw. die Markierungen MK, gut an den SOLL-Positionen zu erkennen sind, die Fahrzeugscheibe FZS, WSS, SS, HS keine Beeinträchtigungen aufweist, wie sie z.B. durch Kondensation auf der Scheibeninnenseite des Fahrzeugs FZ, durch gefrorenen Eis-/Schneebelag auf der Scheibenaußenseite des Fahrzeugs FZ, durch Verschmutzung oder durch Vandalismus/Bemalung hervorgerufen werden, und dementsprechend die wertmäßige Qualitäts- bzw. Gütebewertung BW_{Q},_{G} erfolgt.

Die von Steuereinheit STE mit dem Computer-Programm-Produkt CPP zur Bildinformationsbewertung ermittelte Qualitäts- bzw. Gütebewertung BW_{Q},_{G} wird vorzugsweise zur Bildinformationsauswertung einem Bild-/Videoauswertesystem BVAS übermittelt, das hierfür mit der Steuereinheit STE verbunden ist. Dieses Bild-/Videoauswertesystem BVAS kann jetzt entweder gemäß "Option I" in der FIGUR 1 zum Bildinformationsbewertungssystem BIB und damit zum Fahrzeug FZ gehören oder es ist gemäß "Option II" in der FIGUR 1 nicht Systembestandteil des Bildinformationsbewertungssystems BIB und damit auch nicht Bestandteil des Fahrzeugs FZ.

Das Bild-/Videoauswertesystem BVAS ist dabei vorzugsweise derart ausgebildet, dass die Auswertungen der Bildinformationen historisiert werden, um Kontextänderungen zu erkennen, wie z.B. das Altern der Wischer WSSW, HSW, einsetzenden Regen, allmähliches Beschlagen der Fahrzeugscheiben FZS, WSS, SS, HS.

Zu diesem Zweck werden von der Kamera KM sowohl die IST-Einzelbilder I-EB oder IST-Videos I-VD als auch die SOLL-Einzelbilder S-EB oder SOLL-Videos S-VD in das Bild-/Videoauswertesystem BVAS hochgeladen. Da dieses Bild-/Videoauswertesystem BVAS nicht zwingend zum Bild-/Videoauswertesystem BVAS gehört (vgl. "Option I"; "Option II") ist in der FIGUR 1 nur ein strich-punktierte Verbindung zwischen der Kamera KM und dem Bild-/Videoauswertesystem BVAS dargestellt.

Die von Steuereinheit STE mit dem Computer-Programm-Produkt CPP zur Bildinformationsbewertung ermittelte Qualitäts- bzw. Gütebewertung BW_{Q,G} wird weiterhin vorzugsweise zu Diagnose- und Alarmzwecken einem Diagnose-/Alarmsystem DAS in Form von Diagnosemeldungen DIM oder Alarmmeldungen ALM übermittelt, das hierfür mit der Steuereinheit STE verbunden ist. Dieses Diagnose-/Alarmsystem DAS kann jetzt wieder (wie beim Bild-/Videoauswertesystem BVAS) entweder gemäß "Option I" in der FIGUR 1 zum Bildinformationsbewertungssystem BIB und damit zum Fahrzeug FZ gehören oder es ist gemäß "Option II" in der FIGUR 1 nicht Systembestandteil des Bildinformationsbewertungssystems BIB und damit auch nicht Bestandteil des Fahrzeugs FZ.

Darüber hinaus ist die Steuereinheit STE mit dem Computer-Programm-Produkt CPP zur Bildinformationsbewertung derart ausgebildet, dass bei einem markanten bzw. die Markierungen MK aufweisenden Windschutzscheiben-Wischer WSSW und/oder Heckscheiben-Wischer HSW im Fall von Niederschlag, z.B. Regen, die Qualitäts- bzw. Gütebewertung BW_{Q},_{G} für Regionen in den IST-Einzelbildern I-EB bzw. IST-Videos I-VD derart erfolgt, dass die Regionen, in denen der Wischer WSSW, HSW gerade eben gewischt hat und zu sehen gewesen ist, also der freigewischte Bereich, eine höhere Qualitäts- bzw. Gütebewertung BW_{Q},_{G} erhält als der Bereich, in denen der Wischer WSSW, HSW schon länger nicht mehr gewesen ist.

## Patentansprüche

1. Bildinformationsbewertungsverfahren, bei dem eine Vielzahl von IST-Einzelbildern (I-EB) oder IST-Videos (I-VD) von einem Fahrzeug (FZ) aus, relativ-positioniert zu, vorzugsweise hinter, einer Fahrzeugscheibe (FZS), insbesondere einer Windschutzscheibe (WSS), Seitenscheibe (SS) und/oder Heckscheibe (HS), aufgenommen wird,
**dadurch gekennzeichnet, dass**
**a)** eine Vielzahl von SOLL-Einzelbildern (S-EB) oder SOLL-Videos (S-VD) von Stellungen und/oder Bewegungen markanter, z.B. Markierungen (MK) aufweisender, Fahrzeugscheibenkomponenten (FZSK), insbesondere markanter, z.B. künstlich markierter, Windschutzscheiben-Wischer (WSSW) und/oder Heckscheiben-Wischer (HSW), und aus der gleichen fahrzeugspezifischen Relativposition zur Fahrzeugscheibe (FZS) wie bei der IST-Einzelbild/IST-Video-Erfassung aufgenommen wird,
**b)** für gemeldete Positionen (POS_{FZSK}) der Fahrzeugscheibenkomponenten (FZSK, WSSW, HSW) und zur qualitäts- bzw. gütemäßigen Bildbewertung die IST-Einzelbilder (I-EB) mit den SOLL-Einzelbildern (S-EB) respektive die IST-Videos (I-VD) mit den SOLL-Videos (S-VD) verglichen werden, wobei in Abhängigkeit davon, wie gut zumindest markante Punkte, insbesondere die Markierungen (MK), der Fahrzeugscheibenkomponenten (FZSK, WSSW, HSW) an für die gemeldeten Positionen (POS_{FZSK}) durch den Vergleich definierten SOLL-Positionen zu erkennen sind, die IST-Einzelbilder (I-EB) bzw. IST-Videos (I-VD) qualitäts- bzw. gütemäßig bewertet werden (BW_{Q},_{G}).

2. Verfahren nach Anspruch 1, **dadurch gekennzeichnet, dass**
wenn die markanten Punkte, insbesondere die Markierungen (MK), gut an den SOLL-Positionen zu erkennen sind, die Fahrzeugscheibe (FZS, WSS, SS, HS) keine Beeinträchtigungen aufweist, wie z.B. durch Kondensation auf der Scheibeninnenseite des Fahrzeugs (FZ), durch gefrorenen Eis-/Schneebelag auf der Scheibenaußenseite des Fahrzeugs (FZ), durch Verschmutzung oder durch Vandalismus/Bemalung, und dementsprechend eine Qualitäts- bzw. Gütebewertung (BW_{Q},_{G}) erfolgt.

3. Verfahren nach Anspruch 1 oder 2, **dadurch gekennzeichnet, dass**
die Qualitäts- bzw. Gütebewertungen (BW_{Q},_{G}) zur Bildinformationsauswertung an ein Bild-/Videoauswertesystem (BVAS) gemeldet werden.

4. Verfahren nach Anspruch 3, **dadurch gekennzeichnet, dass**
die Auswertungen der Bildinformationen historisiert werden, um Kontextänderungen zu erkennen, wie z.B. das Altern der Wischer (WSSW, HSW), einsetzenden Regen, allmähliches Beschlagen der Fahrzeugscheiben (FZS, WSS, SS, HS).

5. Verfahren nach einem der Ansprüche 1 bis 4, **dadurch gekennzeichnet, dass**
die Qualitäts- bzw. Gütebewertungen (BW_{Q},_{G}) der Bildinformationsbewertung in Form von Diagnosemeldungen (DIM) oder Alarmmeldungen (ALM) an ein Diagnose-/Alarmsystem (DAS) gemeldet werden.

6. Verfahren nach einem der Ansprüche 1 bis 5, **dadurch gekennzeichnet, dass**
bei einem markanten, insbesondere die Markierungen (MK) aufweisenden, Windschutzscheiben-Wischer (WSSW) und/oder Heckscheiben-Wischer (HSW) im Fall von Niederschlag, insbesondere Regen, die Qualitäts- bzw. Gütebewertung (BW_{Q},_{G}) für Regionen in den IST-Einzelbildern (I-EB) bzw. IST-Videos (I-VD) derart erfolgt, dass die Regionen, in denen der Wischer (WSSW, HSW) gerade eben gewischt hat und zu sehen gewesen ist, also der freigewischte Bereich, eine höhere Qualitäts- bzw. Gütebewertung (BW_{Q},_{G}) erhält als der Bereich, in denen der Wischer (WSSW, HSW) schon länger nicht mehr gewesen ist.

7. Computer-Programm-Produkt (CPP) zur Bildinformationsbewertung mit einem nicht-flüchtigen, lesbaren Speicher (SP), in dem prozessorlesbare Steuerprogrammbefehle eines die Bildinformationsbewertung durchführenden Programm-Moduls (PGM) gespeichert sind, und einem mit dem Speicher (SP) verbundenen Prozessor (PZ), der die Steuerprogrammbefehle des Programm-Moduls (PGM) zur Bildinformationsbewertung ausführt, **dadurch gekennzeichnet, dass**
**a)** zum Laden von Bildmaterial in den Prozessor (PZ)
**a1**) eine Vielzahl von IST-Einzelbildern (I-EB) oder IST-Videos (I-VD) von einem Fahrzeug (FZ) aus, relativ-positioniert zu, vorzugsweise hinter, einer Fahrzeugscheibe (FZS), insbesondere einer Windschutzscheibe (WSS), Seitenscheibe (SS) und/oder Heckscheibe (HS), aufgenommen wird,
**a2)** eine Vielzahl von SOLL-Einzelbildern (S-EB) oder SOLL-Videos (S-VD) von Stellungen und/oder Bewegungen markanter, z.B. Markierungen (MK) aufweisender, Fahrzeugscheibenkomponenten (FZSK), insbesondere markanter, z.B. künstlich markierter, Windschutzscheiben-Wischer (WSSW) und/oder Heckscheiben-Wischer (HSW), und aus der gleichen fahrzeugspezifischen Relativposition zur Fahrzeugscheibe (FZS) wie bei der IST-Einzelbild/IST-Video-Erfassung aufgenommen wird,
**b)** zum Durchführen der Bildinformationsbewertung übermittelte Positionen (POS_{FZSK}) der Fahrzeugscheibenkomponenten (FZSK, WSSW, HSW) in den Prozessor (PZ) geladen werden,
**c)** der Prozessor (PZ) und das Programm-Modul (PGM) derart ausgebildet sind und die Bildinformationsbewertung derart durchführen, dass
für die übermittelten Positionen (POS_{FZSK}) der Fahrzeugscheibenkomponenten (FZSK, WSSW, HSW) und zur qualitäts- bzw. gütemäßigen Bildbewertung die IST-Einzelbilder (I-EB) mit den SOLL-Einzelbildern (S-EB) respektive die IST-Videos (I-VD) mit den SOLL-Videos (S-VD) verglichen werden, wobei in Abhängigkeit davon, wie gut zumindest markante Punkte, insbesondere die Markierungen (MK), der Fahrzeugscheibenkomponenten (FZSK, WSSW, HSW) an für die gemeldeten Positionen (POS_{FZSK}) durch den Vergleich definierten SOLL-Positionen zu erkennen sind, die IST-Einzelbilder (I-EB) bzw. IST-Videos (I-VD) qualitäts- bzw. gütemäßig bewertet werden (BW_{Q},_{G}).

8. Computer-Programm-Produkt (CPP) nach Anspruch 7, **dadurch gekennzeichnet, dass**
der Prozessor (PZ) und das Programm-Modul (PGM) derart ausgebildet sind, dass, wenn die markanten Punkte, insbesondere die Markierungen (MK), gut an den SOLL-Positionen zu erkennen sind, die Fahrzeugscheibe (FZS, WSS, SS, HS) keine Beeinträchtigungen aufweist, wie z.B. durch Kondensation auf der Scheibeninnenseite des Fahrzeugs (FZ), durch gefrorenen Eis-/Schneebelag auf der Scheibenaußenseite des Fahrzeugs (FZ), durch Verschmutzung oder durch Vandalismus/Bemalung, und dementsprechend eine Qualitäts- bzw. Gütebewertung (BW_{Q},_{G}) erfolgt.

9. Computer-Programm-Produkt (CPP) nach Anspruch 7 oder 8, **dadurch gekennzeichnet, dass**
der Prozessor (PZ) und das Programm-Modul (PGM) derart ausgebildet sind, dass die Qualitäts- bzw. Gütebewertungen (BW_{Q},_{G}) zur Bildinformationsauswertung an ein Bild-/Videoauswertesystem (BVAS) gemeldet werden.

10. Computer-Programm-Produkt (CPP) nach einem der Ansprüche 7 bis 9, **dadurch gekennzeichnet, dass** der Prozessor (PZ) und das Programm-Modul (PGM) derart ausgebildet sind, dass die Qualitäts- bzw. Gütebewertungen (BW_{Q},_{G}) der Bildinformationsbewertung in Form von Diagnosemeldungen (DIM) oder Alarmmeldungen (ALM) an ein Diagnose-/Alarmsystem (DAS) gemeldet werden.

11. Computer-Programm-Produkt (CPP) nach einem der Ansprüche 7 bis 10, **dadurch gekennzeichnet, dass** der Prozessor (PZ) und das Programm-Modul (PGM) derart ausgebildet sind, dass bei einem markanten, insbesondere die Markierungen (MK) aufweisenden, Windschutzscheiben-Wischer (WSSW) und/oder Heckscheiben-Wischer (HSW) im Fall von Niederschlag, insbesondere Regen, die Qualitäts- bzw. Gütebewertung (BW_{Q},_{G}) für Regionen in den IST-Einzelbildern (I-EB) bzw. IST-Videos (I-VD) derart erfolgt, dass die Regionen, in denen der Wischer (WSSW, HSW) gerade eben gewischt hat und zu sehen gewesen ist, also der freigewischte Bereich, eine höhere Qualitäts- bzw. Gütebewertung (BW_{Q},_{G}) erhält als der Bereich, in denen der Wischer (WSSW, HSW) schon länger nicht mehr gewesen ist.

12. Bildinformationsbewertungssystem (BIBS), das mindestens eine Kamera (KM) enthält, die
**a)** eine Vielzahl von IST-Einzelbildern (I-EB) oder IST-Videos (I-VD) von einem Fahrzeug (FZ) aus, relativ-positioniert zu, vorzugsweise hinter, einer Fahrzeugscheibe (FZS), insbesondere einer Windschutzscheibe (WSS), Seitenscheibe (SS) und/oder Heckscheibe (HS), aufnimmt,
**dadurch gekennzeichnet, dass**
**b)** die Kamera (KM) eine Vielzahl von SOLL-Einzelbildern (S-EB) oder SOLL-Videos (S-VD) von Stellungen und/oder Bewegungen markanter, z.B. Markierungen (MK) aufweisender, Fahrzeugscheibenkomponenten (FZSK), insbesondere markanter, z.B. künstlich markierter, Windschutzscheiben-Wischer (WSSW) und/oder Heckscheiben-Wischer (HSW), und aus der gleichen fahrzeugspezifischen Relativposition zur Fahrzeugscheibe (FZS) wie bei der IST-Einzelbild/IST-Video-Erfassung aufnimmt,
**c)** ein Fahrzeugscheibenkomponente-Steuergerät (STG_{FZSK}) und eine Steuereinheit (STE) vorhanden sind, die miteinander verbunden sind, wobei das Fahrzeugscheibenkomponente-Steuergerät (STG_{FZSK}) Positionen (POS_{FZSK}) der Fahrzeugscheibenkomponenten (FZSK, WSSW, HSW) an die Steuereinrichtung (STE) übermittelt und die Steuereinheit (STE), die ein Computer-Programm-Produkt (CPP) zur Bildinformationsbewertung mit einem nicht-flüchtigen, lesbaren Speicher (SP), in dem prozessorlesbare Steuerprogrammbefehle eines die Bildinformationsbewertung durchführenden Programm-Moduls (PGM) gespeichert sind, und einem mit dem Speicher (SP) verbundenen Prozessor (PZ), der die Steuerprogrammbefehle des Programm-Moduls (PGM) zur Bildinformationsbewertung ausführt, enthält, mit der Kamera (KM) zwecks Hochladens sowohl der IST-Einzelbilder (I-EB) oder IST-Videos (I-VD) als auch der SOLL-Einzelbilder (S-EB) oder SOLL-Videos (S-VD) verbunden und derart ausgebildet ist, dass für die übermittelten Positionen (POS_{FZSK}) der Fahrzeugscheibenkomponenten (FZSK, WSSW, HSW) und zur qualitäts- bzw. gütemäßigen Bildbewertung die IST-Einzelbilder (I-EB) mit den SOLL-Einzelbildern (S-EB) respektive die IST-Videos (I-VD) mit den SOLL-Videos (S-VD) verglichen werden, wobei in Abhängigkeit davon, wie gut zumindest markante Punkte, insbesondere die Markierungen (MK), der Fahrzeugscheibenkomponenten (FZSK, WSSW, HSW) an für die gemeldeten Positionen (POS_{FZSK}) durch den Vergleich definierten SOLL-Positionen zu erkennen sind, die IST-Einzelbilder (I-EB) bzw. IST-Videos (I-VD) qualitäts- bzw. gütemäßig bewertet werden (BW_{Q},_{G}).

13. Bildinformationsbewertungssystem (BIBS) nach Anspruch 12, **dadurch gekennzeichnet, dass**
die Steuereinheit (STE) derart ausgebildet ist, dass, wenn die markanten Punkte, insbesondere die Markierungen (MK), gut an den SOLL-Positionen zu erkennen sind, die Fahrzeugscheibe (FZS, WSS, SS, HS) keine Beeinträchtigungen aufweist, wie z.B. durch Kondensation auf der Scheibeninnenseite des Fahrzeugs (FZ), durch gefrorenen Eis-/Schneebelag auf der Scheibenaußenseite des Fahrzeugs (FZ), durch Verschmutzung oder durch Vandalismus/Bemalung, und dementsprechend eine Qualitäts- bzw. Gütebewertung (BW_{Q},_{G}) erfolgt.

14. Bildinformationsbewertungssystem (BIBS) nach Anspruch 12 oder 13, **dadurch gekennzeichnet, dass** die Steuereinheit (STE) mit einem Bild-/Videoauswertesystem (BVAS) verbunden und derart ausgebildet ist, dass die Qualitäts- bzw. Gütebewertungen (BW_{Q},_{G}) zur Bildinformationsauswertung an das Bild-/Videoauswertesystem (BVAS) übermittelt werden.

15. Bildinformationsbewertungssystem (BIBS) nach Anspruch 14, **dadurch gekennzeichnet, dass**
das Bild-/Videoauswertesystem (BVAS) derart ausgebildet ist, dass die Auswertungen der Bildinformationen historisiert werden, um Kontextänderungen zu erkennen, wie z.B. das Altern der Wischer (WSSW, HSW), einsetzenden Regen, allmähliches Beschlagen der Fahrzeugscheiben (FZS, WSS, SS, HS).

16. Bildinformationsbewertungssystem (BIBS) nach einem der Ansprüche 12 bis 15, **dadurch gekennzeichnet, dass** die Steuereinheit (STE) mit einem Diagnose-/Alarmsystem (DAS) verbunden und derart ausgebildet ist, dass die Qualitäts- bzw. Gütebewertungen (BW_{Q},_{G}) der Bildinformationsbewertung in Form von Diagnosemeldungen (DIM) oder Alarmmeldungen (ALM) an das Diagnose-/Alarmsystem (DAS) übermittelt werden.

17. Bildinformationsbewertungssystem (BIBS) nach einem der Ansprüche 12 bis 16, **dadurch gekennzeichnet, dass** die Steuereinheit (STE) derart ausgebildet ist, dass bei einem markanten, insbesondere die Markierungen (MK) aufweisenden, Windschutzscheiben-Wischer (WSSW) und/oder Heckscheiben-Wischer (HSW) im Fall von Niederschlag, insbesondere Regen, die Qualitäts- bzw. Gütebewertungen (BW_{Q,G}) für Regionen in den IST-Einzelbildern (I-EB) bzw. IST-Videos (I-VD) derart erfolgen, dass die Regionen, in denen der Wischer (WSSW, HSW) gerade eben gewischt hat und zu sehen gewesen ist, also der freigewischte Bereich, eine höhere Qualitäts- bzw. Gütebewertung (BW_{Q},_{G}) erhält als der Bereich, in denen der Wischer (WSSW, HSW) schon länger nicht mehr gewesen ist.

18. Fahrzeug (FZ), insbesondere für den Schienen- und Straßenverkehr, **dadurch gekennzeichnet, dass** ein Bildinformationsbewertungssystem (BIBS) nach einem der Ansprüche 12 bis 17 in das Fahrzeug zur Fahrgastbeförderung integriert ist.

## Claims

1. Image information assessment method in which a multiplicity of ACTUAL individual images (I-EB) or ACTUAL videos (I-VD) are recorded from a vehicle (FZ), in a manner relatively positioned with respect to, preferably behind, a vehicle window (FZS), in particular a windscreen (WSS), side window (SS) and/or rear window (HS),
**characterized in that**
a) a multiplicity of TARGET individual images (S-EB) or TARGET videos (S-VD) are recorded from positions and/or movements of distinctive vehicle window components (FZSK), e.g. those having markings (MK), in particular distinctive, e.g. artificially marked, windscreen wipers (WSSW) and/or rear window wipers (HSW), and from the same vehicle-specific relative position with respect to the vehicle window (FZS) as in the case of the ACTUAL individual image/ACTUAL video capture,
**b)** for reported positions (POS_{FZSK}) of the vehicle window components (FZSK, WSSW, HSW) and for the purpose of image assessment in respect of quality or merit, the ACTUAL individual images (I-EB) are compared with the TARGET individual images (S-EB) or respectively the ACTUAL videos (I-VD) are compared with the TARGET videos (S-VD) wherein the ACTUAL individual images (I-EB) or respectively ACTUAL videos (I-VD) are assessed in respect of quality or merit (BW_{Q},_{G}) depending on how well at least distinctive points, in particular the markings (MK), of the vehicle window components (FZSK, WSSW, HSW) can be recognized at TARGET positions defined for the reported positions (POS_{FZSK}) by the comparison.

2. Method according to Claim 1, **characterized in that** if the distinctive points, in particular the markings (MK), can be recognized well at the TARGET positions, the vehicle window (FZS, WSS, SS, HS) has no impairments, such as e.g. as a result of condensation on the window interior side of the vehicle (FZ), as a result of frozen ice/snow covering on the window exterior side of the vehicle (FZ), as a result of soiling or as a result of vandalism/painting and a quality or merit assessment (BW_{Q},_{G}) is accordingly effected.

3. Method according to Claim 1 or 2 , **characterized in that** the quality or merit assessments (BW_{Q,G}) are reported to an image/video evaluation system (BVAS) for the purpose of image information evaluation.

4. Method according to Claim 3, **characterized in that** the evaluations of the image information are historicized in order to recognize context changes, such as e.g. the ageing of the wipers (WSSW, HSW), incipient rain, gradual misting up of the vehicle windows (FZS, WSS, SS, HS).

5. Method according to any of Claims 1 to 4, **characterized in that**
the quality or merit assessments (BW_{Q},_{G}) of the image information assessment are reported to a diagnostic/alarm system (DAS) in the form of diagnostic messages (DIM) or alarm messages (ALM).

6. Method according to any of Claims 1 to 5, **characterized in that**
in the case of a distinctive windscreen wiper (WSSW) and/or rear window wiper (HSW), in particular having the markings (MK), in the case of precipitation, in particular rain, the quality or merit assessment (BW_{Q},_{G}) for regions in the ACTUAL individual images (I-EB) or respectively ACTUAL videos (I-VD) is effected in such a way that the regions in which the wiper (WSSW, HSW) has just wiped and has been able to be seen, that is to say the region wiped clear, acquires a higher quality or merit assessment (BW_{Q},_{G}) than the region in which the wiper (WSSW, HSW) has no longer been for quite a long time.

7. Computer program product (CPP) for image information assessment comprising a non-volatile, readable memory (SP), in which processor-readable control program instructions of a program module (PGM) that carries out the image information assessment are stored, and a processor (PZ), which is connected to the memory (SP) and executes the control program instructions of the program module (PGM) for the purpose of the image information assessment,
**characterized in that**
**a**) for the purpose of loading image material into the processor (PZ)
**a1**) a multiplicity of ACTUAL individual images (I-EB) or ACTUAL videos (I-VD) are recorded from a vehicle (FZ), in a manner relatively positioned with respect to, preferably behind, a vehicle window (FZS), in particular a windscreen (WSS), side window (SS) and/or rear window (HS),
**a2**) a multiplicity of TARGET individual images (S-EB) or TARGET videos (S-VD) are recorded from positions and/or movements of distinctive vehicle window components (FZSK), e.g. those having markings (MK), in particular distinctive, e.g. artificially marked, windscreen wipers (WSSW) and/or rear window wipers (HSW), and from the same vehicle-specific relative position with respect to the vehicle window (FZS) as in the case of the ACTUAL individual image/ACTUAL video capture,
**b**) for the purpose of carrying out the image information assessment communicated positions (POS_{FZSK}) of the vehicle window components (FZSK, WSSW, HSW) are loaded into the processor (PZ).
**c**) the processor (PZ) and the program module (PGM) are embodied in such a way and carry out the image information assessment in such a way that for the communicated positions (POS_{FZSK}) of the vehicle window components (FZSK, WSSW, HSW) and for the purpose of image assessment in respect of quality or merit, the ACTUAL individual images (I-EB) are compared with the TARGET individual images (S-EB) or respectively the ACTUAL videos (I-VD) are compared with the TARGET videos (S-VD) wherein the ACTUAL individual images (I-EB) or respectively ACTUAL videos (I-VD) are assessed in respect of quality or merit (BW_{Q,G}) depending on how well at least distinctive points, in particular the markings (MK), of the vehicle window components (FZSK, WSSW, HSW) can be recognized at TARGET positions defined for the reported positions (POS_{FZSK}) by the comparison.

8. Computer program product (CPP) according to Claim 7, **characterized in that**
the processor (PZ) and the program module (PGM) are embodied in such a way that, if the distinctive points, in particular the markings (MK), can be recognized well at the TARGET positions, the vehicle window (FZS, WSS, SS, HS) has no impairments, such as e.g. as a result of condensation on the window interior side of the vehicle (FZ), as a result of frozen ice/snow covering on the window exterior side of the vehicle (FZ), as a result of soiling or as a result of vandalism/painting and a quality or merit assessment (BW_{Q},_{G}) is accordingly effected.

9. Computer program product (CPP) according to Claim 7 or 8, **characterized in that**
the processor (PZ) and the program module (PGM) are embodied in such a way that the quality or merit assessments (BW_{Q},_{G}) are reported to an image/video evaluation system (BVAS) for the purpose of image information evaluation.

10. Computer program product (CPP) according to any of Claims 7 to 9, **characterized in that**
the processor (PZ) and the program module (PGM) are embodied in such a way that the quality or merit assessments (BW_{Q},_{G}) of the image information assessment are reported to a diagnostic/alarm system (DAS) in the form of diagnostic messages (DIM) or alarm messages (ALM) .

11. Computer program product (CPP) according to any of Claims 7 to 10, **characterized in that**
the processor (PZ) and the program module (PGM) are embodied in such a way that, in the case of a distinctive windscreen wiper (WSSW) and/or rear window wiper (HSW), in particular having the markings (MK), in the case of precipitation, in particular rain, the quality or merit assessment (BW_{Q},_{G}) for regions in the ACTUAL individual images (I-EB) or respectively ACTUAL videos (I-VD) is effected in such a way that the regions in which the wiper (WSSW, HSW) has just wiped and has been able to be seen, that is to say the region wiped clear, acquires a higher quality or merit assessment (BW_{Q},_{G}) than the region in which the wiper (WSSW, HSW) has no longer been for quite a long time.

12. Image information assessment system (BIBS) containing at least one camera (KM) which
a) records a multiplicity of ACTUAL individual images (I-EB) or ACTUAL videos (I-VD) from a vehicle (FZ), in a manner relatively positioned with respect to, preferably behind, a vehicle window (FZS), in particular a windscreen (WSS), side window (SS) and/or rear window (HS),
**characterized in that**
b) the camera (KM) records a multiplicity of TARGET individual images (S-EB) or TARGET videos (S-VD) from positions and/or movements of distinctive vehicle window components (FZSK), e.g. those having markings (MK), in particular distinctive, e.g. artificially marked, windscreen wipers (WSSW) and/or rear window wipers (HSW), and from the same vehicle-specific relative position with respect to the vehicle window (FZS) as in the case of the ACTUAL individual image/ACTUAL video capture,
**c**) a vehicle window component controller (STG_{FZSK}) and a control unit (STE) are present, which are connected to one another, wherein the vehicle window component controller (STG_{FZSK}) communicates positions (POS_{FZSK}) of the vehicle window components (FZSK, WSSW, HSW) to the control unit (STE) and the control unit (STE), which contains a computer program product (CPP) for image information assessment comprising a non-volatile, readable memory (SP), in which processor-readable control program instructions of a program module (PGM) that carries out the image information assessment are stored, and a processor (PZ), which is connected to the memory (SP) and executes the control program instructions of the program module (PGM) for the purpose of the image information assessment, is connected to the camera (KM) for the purpose of uploading both the ACTUAL individual images (I-EB) or ACTUAL videos (I-VD) and the TARGET individual images (S-EB) or TARGET videos (S-VD) and is embodied in such a way that for the communicated positions (POS_{FZSK}) of the vehicle window components (FZSK, WSSW, HSW) and for the purpose of image assessment in respect of quality or merit, the ACTUAL individual images (I-EB) are compared with the TARGET individual images (S-EB) or respectively the ACTUAL videos (I-VD) are compared with the TARGET videos (S-VD) wherein the ACTUAL individual images (I-EB) or respectively ACTUAL videos (I-VD) are assessed in respect of quality or merit (BW_{Q},_{G}) depending on how well at least distinctive points, in particular the markings (MK), of the vehicle window components (FZSK, WSSW, HSW) can be recognized at TARGET positions defined for the reported positions (POS_{FZSK}) by the comparison.

13. Image information assessment system (BIBS) according to Claim 12, **characterized in that**
the control unit (STE) is embodied in such a way that, if the distinctive points, in particular the markings (MK), can be recognized well at the TARGET positions, the vehicle window (FZS, WSS, SS, HS) has no impairments, such as e.g. as a result of condensation on the window interior side of the vehicle (FZ), as a result of frozen ice/snow covering on the window exterior side of the vehicle (FZ), as a result of soiling or as a result of vandalism/painting and a quality or merit assessment (BW_{Q},_{G}) is accordingly effected.

14. The image information assessment system (BIBS) according to Claim 12 or 13, **characterized in that**
the control unit (STE) is connected to an image/video evaluation system (BVAS) and is embodied in such a way that the quality or merit assessments (BW_{Q},_{G}) are reported to an image/video evaluation system (BVAS) for the purpose of image information evaluation.

15. Image information assessment system (BIBS) according to Claim 14, **characterized in that**
the image/video evaluation system (BVAS) is embodied in such a way that the evaluations of the image information are historicized in order to recognize context changes, such as e.g. the ageing of the wipers (WSSW, HSW), incipient rain, gradual misting up of the vehicle windows (FZS, WSS, SS, HS).

16. Image information assessment system (BIBS) according to any of Claims 12 to 15, **characterized in that** the control unit (STE) is connected to the diagnostic/alarm system (DAS) and is embodied in such a way that the quality or merit assessments (BW_{Q},_{G}) of the image information assessment are reported to a diagnostic/alarm system (DAS) in the form of diagnostic messages (DIM) or alarm messages (ALM).

17. Image information assessment system (BIBS) according to any of Claims 12 to 16, **characterized in that** the control unit (STE) is embodied in such a way that, In the case of a distinctive windscreen wiper (WSSW) and/or rear window wiper (HSW), in particular having the markings (MK), in the case of precipitation, in particular rain, the quality or merit assessment (BW_{Q},_{G}) for regions in the ACTUAL individual images (I-EB) or respectively ACTUAL videos (I-VD) is effected in such a way that the regions in which the wiper (WSSW, HSW) has just wiped and has been able to be seen, that is to say the region wiped clear, acquires a higher quality or merit assessment (BW_{Q},_{G}) than the region in which the wiper (WSSW, HSW) has no longer been for quite a long time.

18. Vehicle (FZ), in particular for rail and road traffic, **characterized in that**
an image information assessment system (BIBS) according to any of Claims 12 to 17 is integrated into the vehicle for passenger transport.

## Revendications

1. Procédé d'évaluation d'informations d'images, dans lequel une pluralité d'images individuelles RÉELLES (I-EB) ou de vidéos RÉELLES (I-VD) sont enregistrées à partir d'un véhicule (FZ), en positionnement par rapport à, de préférence derrière une vitre de véhicule (FZS), en particulier un pare-brise (WSS), une vitre latérale (SS) et/ou une vitre arrière (HS),
**caractérisé en ce que**
a) une pluralité d'images individuelles DE CONSIGNE (S-EB) ou de vidéos DE CONSIGNE (S-VD) sont enregistrées, de positions et/ou de mouvements de composantes de vitres du véhicule (FZSK) significatives, présentant par exemple des marquages (MK), en particulier d'essuie-glaces de pare-brise (WSSW) et/ou d'essuie-glaces de vitre arrière (HSW) significatifs, marqués par ex. artificiellement, et à partir de la même position relative spécifique du véhicule par rapport à la vitre de véhicule (FZS) comme pour la détection d'images individuelles RÉELLES/vidéos RÉELLES,
b) pour des positions signalées (POS_{FZSK}) des composantes des vitres du véhicule (FZSK, WSSW, HSW) et pour l'estimation d'images en termes de qualité, les images individuelles RÉELLES (I-EB) sont comparées aux images individuelles DE CONSIGNE (S-EB), respectivement, les vidéos RÉELLES (I-VD) sont comparées aux vidéos DE CONSIGNE (S-VD), dans lequel en fonction de comment au moins des points significatifs, en particulier les marquages (MK), des composantes des vitres du véhicule (FZSK, WSSW, HSW) sont reconnus à des positions de CONSIGNE définies par la comparaison pour les positions signalées (POS_{FZSK}), les images individuelles RÉELLES (I-EB), respectivement les vidéos RÉELLES (I-VD), sont estimées en termes de qualité (BW_{Q},_{G}).

2. Procédé selon la revendication 1, **caractérisé en ce que**
lorsque les points significatifs, en particulier les marquages (MK), se reconnaissent bien aux positions DE CONSIGNE, la vitre de véhicule (FZSK, WSSW, SS, HS) ne présente aucun obstacle, par ex. par la condensation sur l'intérieur de la vitre du véhicule (FZ), par du gel/de la neige gelée sur l'extérieur de la vitre du véhicule (FZ), par des salissures ou par du vandalisme/de la peinture, et par conséquent une estimation de la qualité (BW_{Q,G}) est effectuée.

3. Procédé selon la revendication 1 ou 2, **caractérisé en ce que** l'estimation de la qualité (BW_{Q},_{G}) est signalée à un système d'évaluation d'images/de vidéos (BVAS) pour l'évaluation d'informations d'images.

4. Procédé selon la revendication 3, **caractérisé en ce que**
les évaluations des informations d'images sont historicisées pour reconnaître des modifications de contexte, comme par ex. le vieillissement des essuie-glace (WSSW, HSW), de la pluie qui commence, l'embuage progressif des vitres de véhicule (FZSK, WSSW, SS, HS).

5. Procédé selon l'une des revendications 1 à 4, **caractérisé en ce que**
les estimations de la qualité (BW_{Q},_{G}) de l'évaluation d'informations d'images sont signalées sous forme de messages de diagnostics (DIM) ou de messages d'alarme (ALM) à un système de diagnostic/d'alarme (DAS).

6. Procédé selon l'une des revendications 1 à 5, **caractérisé en ce que**
pour un essuie-glace de pare-brise (WSSW) et/ou un essuie-glace de vitre arrière significatif, présentant en particulier les marquages (MK), en cas d'intempérie, en particulier de pluie, l'estimation de la qualité (BW_{Q},_{G}) pour des zones dans les images individuelles RÉELLES (I-EB) respectivement les vidéos RÉELLES (I-VD), est effectuée de telle façon que les zones dans lesquelles l'essuie-glace (WSSW, HSW) vient d'essuyer et qu'il a été vu, c'est-à-dire la zone essuyée, obtiennent une estimation de la qualité (BW_{Q},_{G}) supérieure à la zone dans laquelle l'essuie-glace (WSSW, HSW) n'a pas été depuis longtemps.

7. Produit-programme informatique (CPP) pour l'évaluation d'informations d'images, comprenant une mémoire (SP) non-volatile lisible, dans laquelle sont enregistrées des commandes de programme lisibles par processeur d'un module de programme (PGM) exécutant l'évaluation d'informations d'images, et un processeur (PZ) relié à la mémoire (SP) qui exécute les commandes de programme du module de programme (PGM) pour l'évaluation d'informations d'images,
**caractérisé en ce que**
a) pour charger du matériau d'images dans le processeur (PZ)
a1) une pluralité d'images individuelles RÉELLES (I-EB) ou de vidéos RÉELLES (I-VD) sont enregistrées à partir d'un véhicule (FZ), en positionnement par rapport à, de préférence derrière une vitre de véhicule (FZS), en particulier d'un pare-brise (WSS), une vitre latérale (SS) et/ou une vitre arrière (HS),
a2) une pluralité d'images individuelles DE CONSIGNE (S-EB) ou de vidéos DE CONSIGNE (S-VD) sont enregistrées, de positions et/ou de mouvements de composantes des vitres du véhicule (FZSK) significatives, présentant par exemple des marquages (MK), en particulier d'essuie-glaces de pare-brise (WSSW) et/ou d'essuie-glaces de vitre arrière (HSW) significatifs, marqués par ex. artificiellement, et à partir de la même position relative spécifique du véhicule par rapport à la vitre de véhicule (FZS) comme pour la détection d'images individuelles RÉELLES/vidéos RÉELLES,
b) pour exécuter l'évaluation d'informations d'images, des positions transmises (POS_{FZSK}) des composantes des vitres du véhicule (FZSK, WSSW, HSW) sont chargées dans le processeur (PZ),
c) le processeur (PZ) et le module de programme (PGM) sont ainsi conçus et exécutent l'évaluation d'informations d'images de telle façon que
pour les positions transmises (POS_{FZSK}) des composantes des vitres du véhicule (FZSK, WSSW, HSW) et pour l'estimation d'images en termes de qualité, les images individuelles RÉELLES (I-EB) sont comparées aux images individuelles DE CONSIGNE (S-EB), respectivement, les vidéos RÉELLES (I-VD) sont comparées aux vidéos DE CONSIGNE (S-VD), dans lequel en fonction de comment au moins des points significatifs, en particulier les marquages (MK), des composantes des vitres du véhicule (FZSK, WSSW, HSW) sont reconnus à des positions de CONSIGNE définies par la comparaison pour les positions signalées (POS_{FZSK}), les images individuelles RÉELLES (I-EB), respectivement les vidéos RÉELLES (I-VD), sont estimées en termes de qualité (BW_{Q},_{G}).

8. Produit-programme informatique (CPP) selon la revendication 7, **caractérisé en ce que**
le processeur (PZ) et le module de programme (PGM) sont ainsi conçus que lorsque les points significatifs, en particulier les marquages (MK), se reconnaissent bien aux positions DE CONSIGNE, la vitre de véhicule (FZSK, WSSW, SS, HS) ne présente aucun obstacle, par ex. par la condensation sur l'intérieur de la vitre du véhicule (FZ), par du gel/de la neige gelée sur l'extérieur de la vitre du véhicule (FZ), par des salissures ou par du vandalisme/de la peinture, et par conséquent une estimation de la qualité (BW_{Q},_{G}) est effectuée.

9. Produit-programme informatique (CPP) selon la revendication 7 ou 8, **caractérisé en ce que**
le processeur (PZ) et le module de programme (PGM) sont ainsi conçus que les estimations de la qualité (BW_{Q},_{G}) sont signalées à un système d'évaluation d'images/de vidéos (BVAS) pour l'évaluation d'informations d'images.

10. Produit-programme informatique (CPP) selon l'une des revendications 7 à 9, **caractérisé en ce que**
le processeur (PZ) et le module de programme (PGM) sont ainsi conçus que les estimations de la qualité (BW_{Q},_{G}) de l'évaluation d'informations d'images sont signalées sous forme de messages de diagnostics (DIM) ou de messages d'alarme (ALM) à un système de diagnostic/d'alarme (DAS).

11. Produit-programme informatique (CPP) selon l'une des revendications 7 à 10, **caractérisé en ce que**
le processeur (PZ) et le module de programme (PGM) sont ainsi conçus que pour un essuie-glace de pare-brise (WSSW) et/ou un essuie-glace de vitre arrière (HSW) significatif, présentant en particulier les marquages (MK), en cas d'intempérie, en particulier de pluie, l'estimation de la qualité (BW_{Q,G}) pour des zones dans les images individuelles RÉELLES (I-EB) respectivement les vidéos RÉELLES (I-VD), est effectuée de telle façon que les zones dans lesquelles l'essuie-glace (WSSW, HSW) vient d'essuyer et qu'il a été vu, c'est-à-dire la zone essuyée, obtiennent une estimation de la qualité (BW_{Q},_{G}) supérieure à la zone dans laquelle l'essuie-glace (WSSW, HSW) n'a pas été depuis longtemps.

12. Système d'évaluation d'informations d'images (BIBS) qui contient au moins une caméra (KM), qui
a) enregistre une pluralité d'images individuelles RÉELLES (I-EB) ou de vidéos RÉELLES (I-VD) à partir d'un véhicule (FZ), en positionnement par rapport à, de préférence derrière une vitre de véhicule (FZS), en particulier un pare-brise (WSS), une vitre latérale (SS) et/ou une vitre arrière (HS),
**caractérisé en ce que**
b) la caméra (KM) enregistre une pluralité d'images individuelles DE CONSIGNE (S-EB) ou de vidéos DE CONSIGNE (S-VD) de positions et/ou de mouvements de composantes des vitres du véhicule (FZSK) significatives, présentant par exemple des marquages (MK), en particulier d'essuie-glaces de pare-brise (WSSW) et/ou d'essuie-glaces de vitre arrière (HSW) significatifs, marqués par ex. artificiellement, et à partir de la même position relative spécifique du véhicule par rapport à la vitre de véhicule (FZS), comme pour la détection d'images individuelles RÉELLES/vidéos RÉELLES,
c) un appareil de commande de composantes de vitres de véhicule (STG_{FZSK}) et une unité de commande (STE) sont présents, qui sont reliés entre eux, dans lequel l'appareil de commande de composantes de vitres de véhicule (STG_{FZSK}) transmet à l'unité de commande (STE) des positions (PCS_{FZSK}) des composantes des vitres du véhicule (FZSK, WSSW, HSW), et l'unité de commande (STE), qui contient un produit-programme informatique (CPP) pour l'évaluation d'informations d'images avec une mémoire (SP) non-volatile lisible dans laquelle sont enregistrées des commandes de programme lisibles par processeur d'un module de programme (PGM) exécutant l'évaluation d'informations d'images, et un processeur (PZ) relié à la mémoire (SP) qui exécute les commandes de programme du module de programme (PGM) pour l'évaluation d'informations d'images, est reliée à la caméra (KM) pour le téléchargement tant des images individuelles RÉELLES (I-EB)ou des vidéos RÉELLES (I-VD) que des images individuelles DE CONSIGNE (S-EB) ou des vidéos DE CONSIGNE (S-VD) et est conçue de façon à ce que pour les positions transmises (POS_{FZSK}) des composantes des vitres du véhicule (FZSK, WSSW, HSW) et pour l'estimation d'images en termes de qualité, les images individuelles RÉELLES (I-EB) sont comparées aux images individuelles DE CONSIGNE (S-EB), respectivement, les vidéos RÉELLES (I-VD) sont comparées aux vidéos DE CONSIGNE (S-VD), dans lequel en fonction de comment au moins des points significatifs, en particulier les marquages (MK), des composantes des vitres du véhicule (FZSK, WSSW, HSW) sont reconnus à des positions de CONSIGNE définies par la comparaison pour les positions signalées (POS_{FZSK}), les images individuelles RÉELLES (I-EB), respectivement les vidéos RÉELLES (I-VD) sont estimées en termes de qualité (BW_{Q},_{G}).

13. Système d'évaluation d'informations d'images (BIBS) selon la revendication 12, **caractérisé en ce que**
l'unité de commande (STE) est ainsi conçue que lorsque les points significatifs, en particulier les marquages (MK), se reconnaissent bien aux positions DE CONSIGNE, la vitre de véhicule (FZSK, WSSW, SS, HS) ne présente aucun obstacle, par ex. par la condensation sur l'intérieur de la vitre du véhicule (FZ), par du gel/de la neige gelée sur l'extérieur de la vitre du véhicule (FZ), par des salissures ou par du vandalisme/de la peinture, et par conséquent une estimation de la qualité (BW_{Q},_{G}) est effectuée.

14. Système d'évaluation d'informations d'images (BIBS) selon la revendication 12 ou 13, **caractérisé en ce que**
l'unité de commande (STE) est reliée à un système d'évaluation d'images/de vidéos (BVAS) et est ainsi conçue que les estimations de la qualité (BW_{Q},_{G}) pour l'évaluation d'informations d'images sont transmises au système d'évaluation d'images/de vidéos (BVAS).

15. Système d'évaluation d'informations d'images (BIBS) selon la revendication 14, **caractérisé en ce que**
le système d'évaluation d'images/de vidéos (BVAS) est ainsi conçu que les évaluations des informations d'images sont historicisées pour reconnaître des modifications de contexte, comme par ex. le vieillissement des essuie-glace (WSSW, HSW), de la pluie qui commence, l'embuage progressif des vitres de véhicule (FZSK, WSSW, SS, HS).

16. Système d'évaluation d'informations d'images (BIBS) selon l'une des revendications 12 à 15, **caractérisé en ce que** l'unité de commande (STE) est reliée à un système de diagnostic/d'alarme (DAS) et est ainsi conçue que les estimations de la qualité (BW_{Q},_{G}) de l'évaluation d'informations d'images sont transmises sous forme de messages de diagnostics (DIM) ou de messages d'alarme (ALM) au système de diagnostic/d'alarme (DAS).

17. Système d'évaluation d'informations d'images (BIBS) selon l'une des revendications 12 à 16, **caractérisé en ce que** l'unité de commande (STE) est ainsi conçue que pour un essuie-glace de pare-brise (WSSW) et/ou un essuie-glace de vitre arrière significatif, présentant en particulier les marquages (MK), en cas d'intempérie, en particulier de pluie, les estimations de la qualité (BW_{Q},_{G}) pour des zones dans les images individuelles RÉELLES (I-EB) respectivement les vidéos RÉELLES (I-VD) sont effectuées de telle façon que les zones dans lesquelles l'essuie-glace (WSSW, HSW) vient d'essuyer et qu'il a été vu, c'est-à-dire la zone essuyée, obtiennent une estimation de la qualité (BW_{Q},_{G}) supérieure à la zone dans laquelle l'essuie-glace (WSSW, HSW) n'a pas été depuis longtemps.

18. Véhicule (FZ), en particulier pour le trafic routier et ferroviaire, **caractérisé en ce qu'**un système d'évaluation d'informations d'images (BIBS) selon l'une des revendications 12 à 17 est intégré dans le véhicule pour le transport de passagers.
